(19) Europäisches Patentamt
European Patent Office
Office européen des brevets

(11) **EP 3 167 600 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **15735851.6**

(22) Anmeldetag: **01.07.2015**

(51) Int Cl.:
*H04M 1/2745* (2006.01)      *H04M 1/725* (2006.01)
*H04M 3/42* (2006.01)      *H04W 4/02* (2018.01)

(86) Internationale Anmeldenummer:
**PCT/EP2015/001335**

(87) Internationale Veröffentlichungsnummer:
**WO 2016/005035 (14.01.2016 Gazette 2016/02)**

(54) **VERFAHREN ZUR VERWALTUNG EINES ANRUFJOURNALS, VORRICHTUNG, COMPUTERPROGRAMM UND SOFTWAREPRODUKT HIERFÜR**

METHOD FOR MANAGING A CALL JOURNAL, DEVICE, COMPUTER PROGRAM, AND SOFTWARE PRODUCT FOR THIS PURPOSE

PROCÉDÉ DE GESTION D'UN JOURNAL D'APPELS, DISPOSITIF, PROGRAMME INFORMATIQUE ET PRODUIT LOGICIEL POUR CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2014 DE 102014010305**

(43) Veröffentlichungstag der Anmeldung:
**17.05.2017 Patentblatt 2017/20**

(73) Patentinhaber: **Unify GmbH & Co. KG**
**80807 München (DE)**

(72) Erfinder:
• **KONNERTH, Bernd**
**80637 München (DE)**

• **LEDERER, Thomas**
**82211 Herrsching (DE)**

(74) Vertreter: **Fritzsche, Thomas**
**Fritzsche Patent**
**Naupliastraße 110**
**81545 München (DE)**

(56) Entgegenhaltungen:
**EP-A1- 2 503 764      WO-A2-2012/100227**
**US-A1- 2013 346 408      US-A1- 2014 185 609**
**US-B1- 8 705 707**

**Beschreibung**

Die Erfindung betrifft ein Verfahren zur Verwaltung eines Anrufjournals. Die Erfindung betrifft auch eine Vorrichtung, ein Computerprogramm und ein Softwareprodukt.

Besitzer von Mobiltelefonen benutzen ihr Telefon für die Kommunikation (Sprache, Video, Kurznachrichten) mit Kommunikationspartnern. Vielfach werden zum Aufbau einer Kommunikationsverbindung historische Verbindungsdaten, d. h., eine im Mobiltelefon integrierte Funktion wie etwa Call-Journal, Call-Log, Verbindungsliste (alle diese werden im Sinne der Erfindung als Anrufjournal verstanden) verwendet. Der Benutzer blättert in seinem Anrufjournal zurück und wählt die gewünschte Person aus. Unter Umständen ist das Anrufjournal lang und es ist zeitaufwändig, den gewünschten Eintrag zu finden. Anrufjournale werden zudem derzeit in der Regel chronologisch geführt. Das bedeutet, dass Anrufe nach Zeit und Datum sortiert in einer Liste angezeigt werden. Zusätzlich wird zwischen verpassten, angenommenen und ausgehenden Anrufen unterschieden. Auch eine Gruppierung (Zusammenfassung) aller Anrufe von/zu einer bestimmten Gegenstelle wird derzeit von einigen Mobilgeräten angeboten.

Gemäß WO2011098491 werden Anruflisten entsprechend der aktuellen geographischen Position des mobilen Endgerätes organisiert und angezeigt, um die Einträge leichter und effizienter zu identifizieren. Dazu wird zu jedem Kommunikationsereignis die aktuelle Position gespeichert.

Die in EP1528770 offenbarte Lehre gibt dem Benutzer die Möglichkeit, während oder nach einem Gespräch den relevanten bzw. einen selektierten Eintrag einer Anrufliste zusammen mit individuellen Informationen zu speichern, wobei die Speicherung unabhängig von der Anrufliste erfolgt. Individuelle Informationen sind dabei Gesprächsnotizen, Sprachaufzeichnungen und dergleichen, die durch den Benutzer eingegeben werden. Die so erstellten Informationen können später zusammen mit einem Service-Menü angezeigt werden. Dieses Menü erlaubt z. B. die Verwendung der aus einer Anrufliste hinzugefügten Daten zum automatischen Verbindungsaufbau, zur Weiterleitung der Informationen oder zum Lesen bzw. Editieren eines Directory-Eintrags.

US 8 705 707 B1 offenbart ein Verfahren, bei dem festgestellt wird, dass ein Telefonanruf beantwortet, verpasst oder beendet wurde. Das Verfahren umfasst ein Erzeugen einer Angabe des Anrufs, der an einer grafischen Benutzerschnittstelle beantwortet, verpasst oder beendet wird, und ein Bestimmen eines oder mehrerer Kontextidentifikatoren, die dem Telefonanruf zugeordnet sind. Ferner umfasst das Verfahren das Speichern der Kontextidentifizierer in Verbindung mit der Angabe des Telefonanrufs in einer Datenstruktur, die andere durchsuchbare Kontextidentifikatoren enthält.

EP 2 503 764 A1 offenbart ein Verfahren zum Bestimmen eines Ortes einer Benutzereinrichtung und eines Benutzers, welches die folgenden Schritte umfasst: Identifizieren eines Benutzerkontextes des Benutzers basierend auf dem Standort; Erzeugen eines Kommunikationsverlaufs auf der Grundlage von empfangenen und von der Benutzereinrichtung gesendeten Kommunikationen innerhalb eines Zeitfensters; Speichern von Kontakteinträgen; und Erzeugen eines Rankings für zumindest einige der Kontakteinträge basierend auf dem identifizierten Benutzerkontext, dem Kommunikationsverlauf und den Kontakteinträgen, wobei das Ranking eine abgeleitete Benutzerpriorität von Kontakteinträgen ist.

WO 2012/100227 A2 offenbart ein Verfahren zum Bestimmen einer Kommunikationskontaktrelevanz für einen Benutzer, wobei das Verfahren die folgenden Schritte umfasst: Analysieren gespeicherter Kontaktinformationen einer Vielzahl von Kontakten, mit denen der Benutzer Information empfangen oder übermitteln kann; Analysieren von Kontextinformationen, die für die Wahrscheinlichkeit einer Kommunikation durch den Benutzer mit den Kontakten relevant sind, wobei die Kontextinformationen Informationen enthalten, die sich von den Kontakten unterscheiden, mit denen der Benutzer zuletzt kommuniziert hat.

US 2014/185609 A1 offenbart Systeme und Verfahren für die Ableitung von Kontaktinformationen für einen oder mehrere Kontakte einer Kontaktliste. Hier werden die Kontaktinformationen verwendet, um die Anzeige von Kontakten auf einer Kontaktliste zu verändern. Die Änderung kann das Ändern einer Reihenfolge, in der die Kontakte in einer Kontaktliste dargestellt werden, umfassen.

Weiterhin wird auf die Druckschrift US 2013/346408 A1 verwiesen, welche die Verwendung von Informationen eines Beschleunigungssensors beschreibt, um zu bestimmen, in welche Benachrichtigungsklasse eine Benachrichtigung einzuordnen ist.

Es ist eine Aufgabe der vorliegenden Erfindung, einem Benutzer eines Kommunikationsgeräts die Handhabung eines Anrufjournals zu erleichtern.

Die Aufgabe wird erfindungsgemäß durch die Merkmale der unabhängigen Ansprüche gelöst. Vorteilhafte Ausführungsformen und Weiterentwicklungen der Erfindung sind in den Unteransprüchen angegeben.

Im Sinne der Erfindung ist ein Kommunikationsgerät jedes Gerät, das zur Durchführung einer Kommunikation ausgelegt und eingerichtet ist, und kann beispielsweise ein Mobiltelefone, sonstiges Telefon, Faxgerät, Mailserver, FTP-Server sein. Insbesondere kann ein Kommunikationsgerät ein mobiles oder stationäres Gerät für Sprachkommunikation und/oder für Datenverkehr sein. Ein Anruf ist im Sinne der Erfindung jeder Kommunikationsvorgang, der mit dem Kommunikationsgerät durchgeführt wird. Dabei ist als ein ausgehender Anruf einer, der von der Seite des Kommunikationsgeräts veranlasst wird, und als ein eingehender Anruf einer, der an das Kommunikationsgerät gerichtet ist zu verstehen.

Eine Richtung des Anrufs kann in diesem Sinne eingehend oder ausgehend sein. Eine Verbindungskennung ist im Sinne der Erfindung jede Codefolge bzw. Zeichenfolge, die zur Identifizierung eines Kommunikationspartners geeignet ist, wie beispielsweise eine Telefonnummer (einschl. Fax-, Service-Nummern etc.), E-Mail-Adresse, FTP-Kennung, URL, oder dergleichen. Es ist zu verstehen, dass eine Verbindungskennung einem Kommunikationspartner entsprechen kann. Allerdings können einem Kommunikationspartner auch mehrere Verbindungskennungen zugewiesen sein. Kalenderereignisse sind im Sinne der Erfindung vorab festgelegte Ereignisse wie beispielsweise Besprechungen, Trainingseinheiten, Freizeitaktivitäten, die in einem von dem Endgerät aus zugreifbaren Kalender eingetragen sind. Es versteht sich, dass Kriterien kumulierbar und gegebenenfalls auch logisch verknüpfbar sind. Jede Kumulierungs- oder Verknüpfungsvorschrift von Kriterien kann für sich genommen als Kriterium verstanden werden. Die Erfindung ermöglicht eine intelligente Sortierung und/oder Filterung der Anruflisten (Anrufjournal) durch Nutzung weiterer Informationen. Mit dieser Erfindung wird eine verbesserte Sortierung der Anruflisten ("call logs") ermöglicht, die zeit-, orts- und situationsabhängige Filter und Sortierfunktionen umfasst. Die vorgeschlagene intelligente Sortierung basiert beispielsweise auf statistischen Berechnungen, in die Parameter wie das aktuelle Datum, die Uhrzeit, Kalendereinträge und der Aufenthaltsort (aus Umgebungsinformationen abgeleiteter aktueller Aufenthaltsort) einfließen. Ein weiterer Parameter kann eine gespeicherte Ortsinformation sein, die einem jeweiligen, vergangenen Kommunikationsereignis zugeordnet ist. Die Berechnung selbst kann im Endgerät oder zentral in einem Server erfolgen. Durch das erfindungsgemäße Verfahren ist es möglich, die Handhabung von Anrufjournalen eines Benutzers zu erleichtern.

Eine bevorzugte Ausführungsform der vorliegenden Erfindung geht von der Überlegung aus, dass die Wahl der Kommunikationspartner sehr häufig in Korrelation zu situativen Informationen wie etwa zum Standort des Benutzers oder auch der aktuellen Uhrzeit erfolgt. So wird man sich z. B. normalerweise, wenn man zu Hause ist, nicht selbst zu Hause anrufen, oder eine häufig gewählte Nummer auf dem Arbeitsweg kann die Nummer eines Vorgesetzten oder Teammitglieds sein, um ihn z. B. über den Zeitpunkt des voraussichtlichen Eintreffens am Einsatzort zu informieren, oder aus einem Besprechungszimmer heraus wird mittwochs morgens 10:00 Uhr immer die Rufnummer einer bestimmten Konferenzbridge gewählt, und dergleichen mehr. Eine intelligente Verwaltung des Anrufjournals mit Berücksichtigung von Zeit und Ort kann helfen, diesen Vorgang noch komfortabler zu gestalten.

Auf der Grundlage der vorstehenden Überlegungen kann ein weiteres Kriterium zur Festlegung der Reihenfolge der Listeneinträge der Anzeigeliste aus der Gruppe, die:

- eine aktuelle Uhrzeit, insbesondere Tageszeit, die vorzugsweise aus der aktuellen Uhrzeit abgeleitet wird,
- ein aktuelles Datum, insbesondere einen aktuellen Wochentag, der vorzugsweise aus dem aktuellen Datum abgeleitet wird, und
- aktuelle Standortinformationen

zum Zeitpunkt der Erzeugung der Anzeigeliste umfasst, ausgewählt sein. Dabei ist eine Tageszeit im Sinne der Erfindung eine vorab festgelegte Kategorie der Uhrzeit, wie beispielsweise "morgens", "nachmittags", "abends", "nachts". Das Verfahren kann noch flexibler und nutzerfreundlicher gestaltet werden, wenn Tageszeiten frei definierbar sind wie etwa als "Kernarbeitszeit", "Mittagspause". Die Grenzen der Kategorien können ebenfalls frei definierbar sein. Mit den zusätzlichen Kriterien können sinnvolle logische Verknüpfungen der Sortierkriterien verwirklicht werden wie etwa "Kernarbeitszeit nur Mo-Fr", "während Kernarbeitszeit zurückgewiesen", "während Mittagspause angenommen", etc.

In einer Weiterbildung des erfindungsgemäßen Verfahrens kann vorgesehen sein, dass die Bewertung eine Wahrscheinlichkeitsbetrachtung umfasst, die für jede Verbindungskennung anhand bisheriger Journaleinträge im Anrufjournal ermittelt, mit welcher Wahrscheinlichkeit ein Anruf, auf welche das wenigstens eine Kriterium zutrifft, mit dieser Verbindungskennung von dem Kommunikationsgerät ausgehen oder an dem Kommunikationsgerät eingehen wird. Es ist zu verstehen, dass auch eingehende Anrufe in die Bewertung eingehen können, da auch sie einen Hinweis auf einen bei Eintreten der ausgewählten Kriterien möglicherweise gewünschten Kommunikationsvorgang geben können. Wer den Anruf in der Historie jeweils getätigt hat, ist dabei unter Umständen nicht entscheidend.

Die Übersichtlichkeit der Liste kann erhöht werden, wenn gemäß einer Weiterbildung des erfindungsgemäßen Verfahrens mehrere Journaleinträge des Anrufjournals zu einem Listeneintrag der Anzeigeliste zusammengefasst werden. Dabei umfasst ein Listeneintrag vorzugsweise alle Journaleinträge zu einer Verbindungskennung und/oder einer Person, gegebenenfalls zusammengefasst zu dem gleichen Kommunikationsmedium und/oder der gleichen Kommunikationsart.

Ebenso können die Übersichtlichkeit der Anzeigeliste wie auch die Zielsicherheit der Sortierung erhöht werden, wenn gemäß einer Weiterbildung des erfindungsgemäßen Verfahrens die Anzeigeliste beschränkt ist auf

- eine vorgegebene maximale Anzahl von Listeneinträgen, und/oder
- Listeneinträge mit einer vorgegebenen Mindest-Wahrscheinlichkeit.

Die Flexibilität und User-Awareness des Verfahrens können erhöht werden, wenn gemäß Weiterbildungen des erfindungsgemäßen Verfahrens die Bestimmung der Reihenfolge durch den Verwender des Kommunikationsgeräts beeinflussbar ist, durch zumindest eine Maßnahme, die ausgewählt ist aus:

- Auswahl, Bevorzugung und/oder Ausschluss von Gruppen von Verbindungskennungen,
- Beschränkung auf ein- oder ausgehende Anrufe,
- Festlegung einer Mindest-Wahrscheinlichkeit,
- Festlegung einer maximalen Anzahl von Listeneinträgen.

In Ausführungsformen des erfindungsgemäßen Verfahrens kann vorgesehen sein, dass die Standortinformationen aus der Gruppe ausgewählt sind, die umfasst:

- Ortskoordinaten eines Satellitennavigationssystems,
- WLAN-Zugriff auf einen oder mehrere Einwahlknoten,
- Nähe oder Pairing-Zustand zu einem oder mehreren anderen Bluetooth-Geräten,
- RFID-Informationen,
- Umfeld kategorien,
- aktuelle Wetterdaten.

Dabei ist ein Satellitennavigationssystem im Sinne der Erfindung ein System, bei dem der Standort aufgrund von Laufzeit-Peildaten mehrerer Satelliten bestimmt wird, z.B. (NAVSTAR) GPS, Galileo, Compass, GLONASS, IRNSS, oder dergleichen, auch Erweiterungssysteme wie WASS, EGNOS, MSAS, SDKM, etc. Unter Umfeldkategorien werden im Sinne der Erfindung Arten eines Umfelds, in dem sich der Benutzer des Kommunikationsgeräts befindet, die einen Rückschluss auf ein bevorzugtes Kommunikationsverhalten des Benutzers erlauben und die beispielsweise, aber nicht nur, aus Ortskoordinaten und/oder aus der Auswertung eines Zugriffs auf bestimmte Einwahlknoten (Access-Points) bzw. Bluetooth-Geräte und/oder RFID-Informationen abgeleitet sein können, verstanden. Die Umfeldkategorien können beispielsweise, aber nicht nur, Auto, Wohnhaus, Büro, Besprechungsraum, Arbeit etc. umfassen. Wetterdaten können im Sinne der Erfindung beispielsweise, aber nicht nur, Temperatur und/oder Niederschlag umfassen. Somit können Kontakte zu bestimmten Freizeitaktivitäten in die Priorisierung einbezogen werden.

Gemäß einem weiteren Gesichtspunkt der Erfindung wird eine Vorrichtung zur Verwaltung eines Anrufjournals eines vorzugsweise mobilen Kommunikationsgeräts, das insbesondere als Telefon oder mobiles Endgerät ausgeführt ist vorgeschlagen, wobei die Vorrichtung zur Durchführung des vorstehend beschriebenen Verfahrens ausgebildet und eingerichtet ist. Die Vorrichtung kann vorzugsweise die Vorrichtung das Kommunikationsgerät selbst oder ein zentraler Anrufverwaltungsserver sein.

Weitere Gesichtspunkte der Erfindung betreffen ein Computerprogramm zur Verwaltung eines Anrufjournals eines vorzugsweise mobilen Kommunikationsgeräts, das insbesondere als Telefon oder mobiles Endgerät ausgeführt ist, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, und ein Softwareprodukt zur Verwaltung eines Anrufjournals eines vorzugsweise mobilen Kommunikationsgeräts, das insbesondere als Telefon oder mobiles Endgerät ausgeführt ist, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist. Die Erfindung kann auch durch ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein.

Dabei kann der Computer auch durch das Kommunikationsgerät, einen Server wie etwa einen Anrufverwaltungsserver, einen Arbeitsplatzcomputer oder dergleichen verkörpert sein.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf die anderen Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale der verschiedenen Ausführungsbeispiele grundsätzlich stets miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind

Fig. 1          eine schematische Darstellung eines Kommunikationsgeräts gemäß der vorliegenden Erfindung;

Fig. 2          eine schematische Darstellung einer gemäß der vorliegenden Erfindung nach Wahrscheinlichkeit sortierten Anzeigeliste von Kontakten und Medien;

Fign. 3A-3D   schematische Darstellungen eines Ausschnitts der Anzeigeliste von Fig. 2 in verschiedenen Situationen; und

Fig. 4          eine Blockdarstellung zur Veranschaulichung eines Berechnungsgangs zur Ermittlung der Anzeigeliste von Fig. 2.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

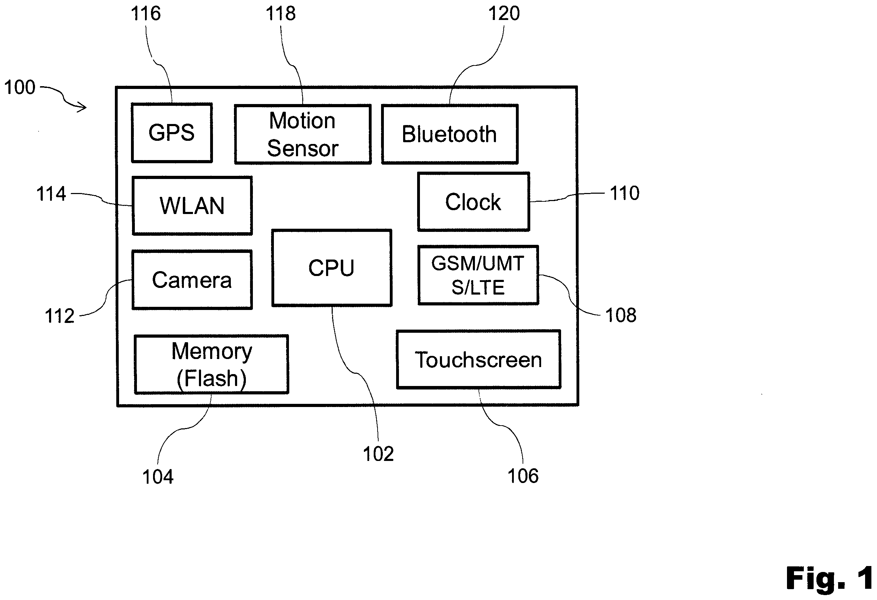

Fig. 1 zeigt eine schematische Darstellung eines Kommunikationsgeräts 100 gemäß einem Ausführungsbeispiel der vorliegenden Erfindung. Das Kommunikationsgerät 100 ist zur Ausführung des weiter unten im einzelnen beschriebenen Verfahrens ausgelegt und eingerichtet. In dem vorliegenden Ausführungsbeispiel ist das Kommunikationsgerät 100 ein mobiles Endgerät, insbesondere ein Smartphone.

Gemäß der Darstellung in Fig. 1 weist das Kommunikationsgerät 100 eine zentrale Verarbeitungseinheit (CPU) 102 auf. Ferner weist das Kommunikationsgerät einen Speicher 104, einen Touchscreen 106, eine Mobilkommunikationseinheit 108, eine Uhr 110, eine Kamera 112, eine WLAN-Einheit 114, eine GPS-Einheit 116, einen Bewegungssensor 118 und eine Bluetooth-Einheit 120 auf, die mit der CPU 102 verbunden sind und auch untereinander verbunden sein können.

Der Speicher 104 ist vorliegend als Flash-Speicher ausgebildet und weist unter anderem ein Adressbuch auf. In dem Speicher 104 sind auch historische Verbindungsdaten sowie Kalenderereignisse gespeichert. Der Touchscreen 106 ist eine Eingabe-/Ausgabeeinheit zur Anzeige von Verarbeitungsergebnissen der CPU 102 über eine durch LCD und/oder LED realisierte Pixelgrafik sowie zur Erkennung von Benutzereingaben durch eine berührungssensitive Ausführung.

Die Mobilkommunikationseinheit 108, die zur Kommunikation mit anderen Kommunikationspartner über GSM und/oder UMTS und/oder LTE und/oder andere Mobilfunkstandards ausgelegt und eingerichtet ist, stellt mobile Netzverbindungen her und liefert Informationen über verwendete Netze und deren Güte. Die Uhr 110 liefert eine Information über eine aktuelle Uhrzeit und ein aktuelles Datum. Die Kamera 112 liefert eine Information über eine Helligkeit im Raum. Die WLAN-Einheit 114, die zur drahtlosen Kommunikation mit WLAN-Netzen ausgelegt und eingerichtet ist, liefert auch Informationen über Netze in der Nähe, deren Signalstärke sowie gegebenenfalls verbundene Netze. Die GPS-Einheit 116 liefert auch GPS-Lokalisierungsinformationen über den Standort des Kommunikationsgeräts 100. Der Bewegungssensor 118, der beispielsweise als Trägheitssensor ausgeführt ist, liefert auch Informationen über einen Bewegungszustand des Kommunikationsgeräts 100. Der Bewegungszustand des Kommunikationsgeräts 100 kann zahlenmäßig wie etwa als Beschleunigung im Raum wie auch kategorisiert wie etwa als "Gehen", "Laufen", "Fahren", "Ruhe" ausgedrückt werden. Die Bluetooth-Einheit 120, die zur Herstellung einer Bluetooth-Verbindung mit anderen Bluetooth-Geräten in der Nähe ausgeführt und eingerichtet ist, liefert auch Informationen über andere Bluetooth-Geräte in der Nähe, wie etwa Kfz-Freisprecheinrichtung, verbundenes Bluetooth-Headset, oder dergleichen.

Die CPU 102 kann auch als zentraler Prozessor bezeichnet werden. Die CPU empfängt und verarbeitet während der Durchführung des erfindungsgemäßen Verfahrens die von dem Speicher 104, der Mobilkommunikationseinheit 108, der Uhr 110, der Kamera 112, der WLAN-Einheit 114, der GPS-Einheit 116, dem Bewegungssensor 118 und der Bluetooth-Einheit 120 gelieferten Informationen und führt unter anderem eine Berechnung von Wahrscheinlichkeiten unter Einbeziehung verschiedener Quellgrößen und eine Aufbereitung der Ergebnisse zur Anzeige durch. Auf dem Touchscreen 106 wird schließlich eine Kontakt-/Aktionsliste nach Wahrscheinlichkeiten sortiert und/oder gefiltert ausgegeben.

Obschon das Kommunikationsgerät 100 vorstehend als mobiles Endgerät, insbesondere Smartphone, beschrieben worden ist. versteht sich, dass die vorliegende Erfindung auf jede Art von Kommunikationsgerät, das zur Ausführung der beschriebenen Funktionen einrichtbar ist, anwendbar ist. Obschon die zentrale Verarbeitungseinheit (CPU) 102, der Speicher 104, der Touchscreen 106, die Mobilkommunikationseinheit 108, die Uhr 110, die Kamera 112, die WLAN-Einheit 114, die GPS-Einheit 116, der Bewegungssensor 118 und die Bluetooth-Einheit 120 jeweils als separate Funktionseinheiten dargestellt und beschrieben sind, können einige dieser Einheiten physikalisch und/oder logisch zusammengefasst sein.

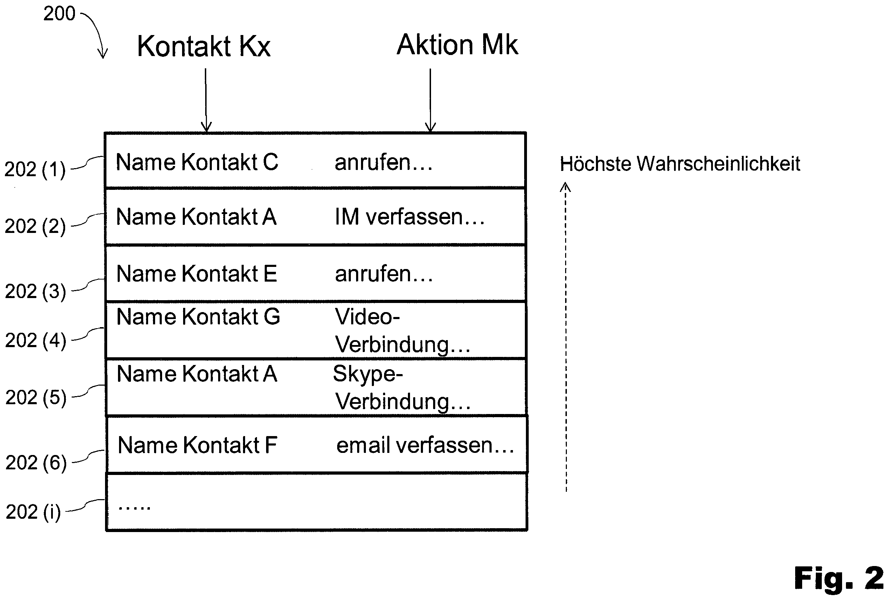

Fig. 2 ist eine schematische Darstellung einer gemäß der vorliegenden Erfindung nach Wahrscheinlichkeit sortierten Anzeigeliste 200 von Kontakten und Medien. Wie in Fig. 2 gezeigt, weist die Anzeigeliste 200 eine Vielzahl von Listeneinträgen 202 (im Einzelnen nummeriert mit 202(1)-202(6), 202(i)) auf. Jeder der Listeneinträge 202 ist ein Wertepaar eines Kontaktnamens Kx mit einer dazugehörigen Medien-Aktion Mk. Die Anzeigeliste 200 ist so sortiert, dass derjenige Listeneintrag 202 mit der höchsten Wahrscheinlichkeit für die jeweilige Kombination aus Kontakt-Namen Kx und Medien-Aktion Mk an erster Stelle erscheint, der Listeneintrag 202 mit der zweithöchsten Wahrscheinlichkeit an zweiter Stelle (202(2)) u. s. w. Somit sind die Listeneinträge 202 von Journaleinträgen eines Anrufjournals, in welchem jeder Journaleintrag zumindest eine Verbindungskennung des Kommunikationspartners, Datum und Uhrzeit des Anrufs und die Richtung des Anrufs als Kommunikationsmetadaten aufweist, abgeleitet, wie weiter unten genauer beschrieben wird.

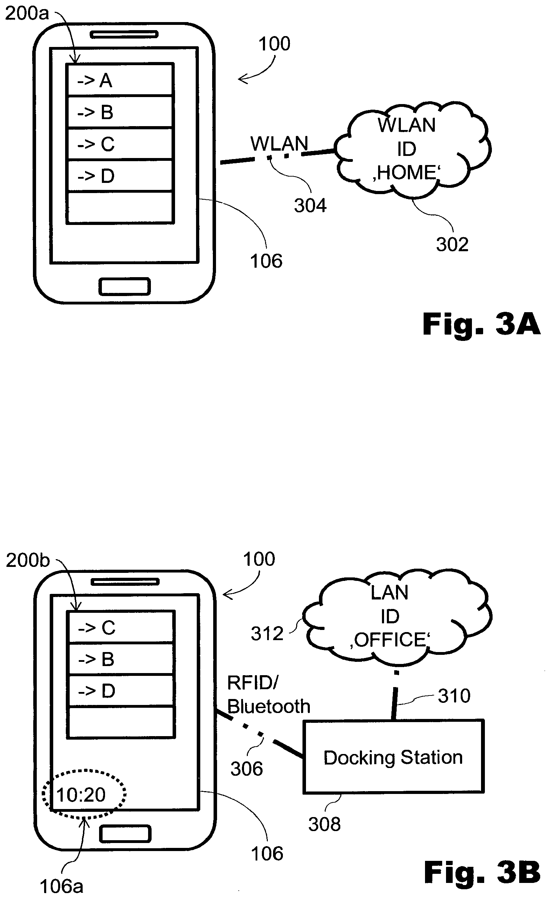

Fign. 3A bis 3D sind jeweils schematische Darstellungen des Kommunikationsgeräts 100 mit dessen Touchscreen 106, auf welchem jeweils eine Variante 200a-200d der Anzeigeliste 200 von Fig. 2 entsprechend einer Situation dargestellt ist.

Gemäß der Darstellung in Fig. 3A befindet sich ein Benutzer des Kommunikationsgeräts 100 zu Hause. Diese Situation ist dadurch charakterisiert, dass sich das Kommunikationsgerät 100 in der Umgebung eines WLAN 302 mit der ID 'HOME' befindet und zu diesem eine WLAN-Verbindung 304 aufgebaut hat, was durch die WLAN-Einheit (114 in Fig. 1) des Kommunikationsgeräts 100 festgestellt wird. In dieser Situation ist durch die CPU (102 in Fig. 1) des Kommunikationsgeräts 100 die Anzeigeliste 200a erzeugt worden und wird auf dem Touchscreen 106 angezeigt, in welcher die Kontakte A, B, C, und D aus dem Adressbuch in der angegebenen Reihenfolge sortiert sind. Als Kontakt kann auch ein Wertepaar aus Kontaktname und Medienart verstanden werden, wie weiter unten genauer beschrieben wird.

Gemäß der Darstellung in Fig. 3B befindet sich ein Benutzer des Kommunikationsgeräts 100 im Büro. Diese Situation ist dadurch charakterisiert, dass das Kommunikationsgerät 100 eine RFID/Bluetooth-Verbindung 306 zu einer Docking-Station 308 aufgebaut hat, was durch die Bluetooth-Einheit (120 in Fig. 1) des Kommunikationsgeräts 100 festgestellt wird. Die Docking-Station 308 ist ihrerseits über eine LAN-Verbindung 310 mit einem Firmennetz (LAN) 312 mit der ID 'OFFICE' verbunden. In der dargestellten Situation zeigt der Touchscreen 106 in einem Uhrzeit-Anzeigebereich 106a die von der Uhr (110 in Fig. 1) gegebene Uhrzeit 10:20 an. Dies wird als Tageszeit "Vormittag" interpretiert. In dieser Situation, die als "Büro vormittags" bezeichnet werden kann, ist durch die CPU (102 in Fig. 1) des Kommunikationsgeräts 100 die Anzeigeliste 200b erzeugt worden und wird auf dem Touchscreen 106 angezeigt, in welcher die Kontakte C, B und D aus dem Adressbuch in der angegebenen Reihenfolge sortiert sind.

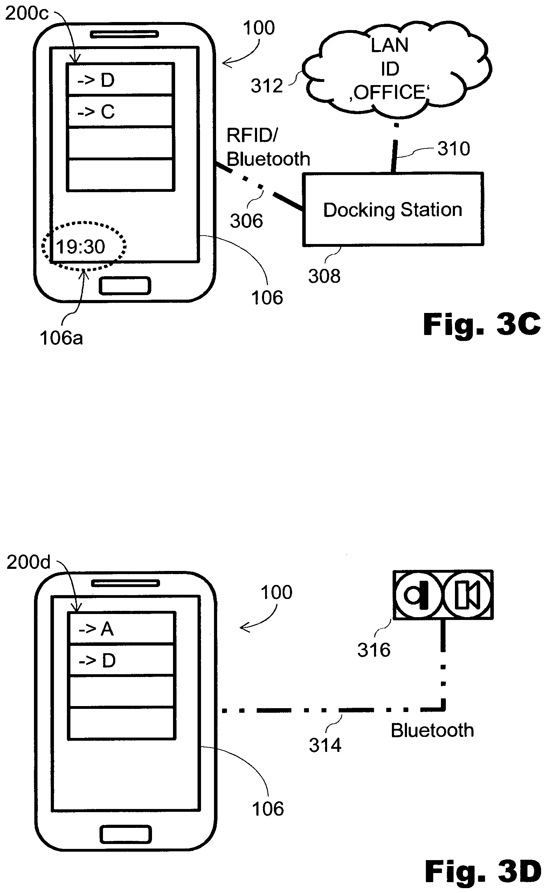

Die in Fig. 3C dargestellte Situation unterscheidet sich von der in Fig. 3B dargestellten nur darin, dass der Touchscreen 106 in dem Uhrzeit-Anzeigebereich 106a die von der Uhr (110 in Fig. 1) gegebene Uhrzeit 19:30 anzeigt. Dies wird als Tageszeit "Abend" interpretiert. In dieser Situation, die als "Büro abends" bezeichnet werden kann, ist durch die CPU (102 in Fig. 1) des Kommunikationsgeräts 100 die Anzeigeliste 200c erzeugt worden und wird auf dem Touchscreen 106 angezeigt, in welcher die Kontakte D und C aus dem Adressbuch in der angegebenen Reihenfolge sortiert sind. Diese Anzeigeliste 200c unterscheidet sich von der am gleichen Ort "Büro" am Vormittag angezeigt wird, da beispielsweise abends häufiger andere Rufnummern als morgens gewählt werden.

Gemäß der Darstellung in Fig. 3D befindet sich ein Benutzer des Kommunikationsgeräts 100 in seinem Kraftfahrzeug. Diese Situation ist dadurch charakterisiert, dass das Kommunikationsgerät 100 eine Bluetooth-Verbindung 314 mit einer Freisprecheinrichtung 316 aufgebaut hat, was durch die Bluetooth-Einheit (120 in Fig. 1) des Kommunikationsgeräts 100 festgestellt wird. In dieser Situation ist durch die CPU (102 in Fig. 1) des Kommunikationsgeräts 100 die Anzeigeliste 200d erzeugt worden und wird auf dem Touchscreen 106 angezeigt, in welcher die Kontakte A und D aus dem Adressbuch in der angegebenen Reihenfolge sortiert sind. Wie im vorherigen Beispiel gemäß der Darstellung in Fig. 3C sind hier nur drei Kontakte angezeigt, was beispielsweise daran liegen kann, dass die Wahrscheinlichkeit anderer Kontakte unterhalb einer Schwelle S lag.

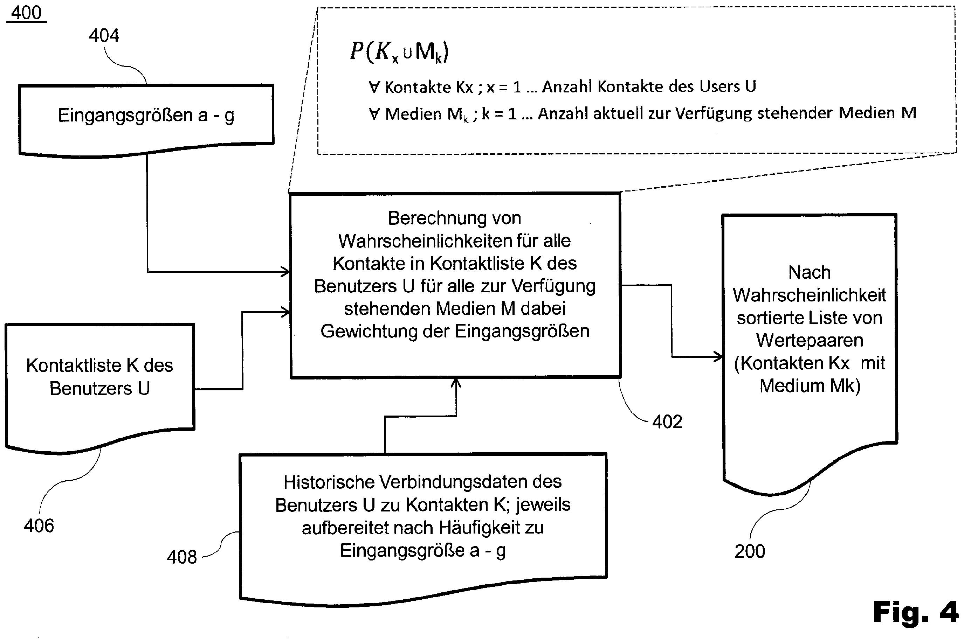

Fig. 4 zeigt eine Blockdarstellung zur Veranschaulichung eines Berechnungsgangs zur Ermittlung der Anzeigeliste von Fig. 2. Dabei symbolisiert das Bezugszeichen 400 einen Prozess zur Durchführung des Berechnungsgangs. Ein Prozess kann als ein Verfahren im Sinne der vorliegenden Erfindung verstanden werden.

Gemäß der Darstellung in Fig. 4 weist der Prozess 400 einen zentralen Berechnungsschritt 402 auf. Der Schritt 402 verarbeitet eine Anzahl von Eingangsgrößen a bis g (symbolisiert durch eine Eingangsgrößendatei 404), eine Kontaktliste K (auch als Adressliste im Sinne der Erfindung bezeichnet, wobei jeder Eintrag einem Kontakt entspricht) des Benutzers U (symbolisiert durch Kontaktdatei 406),sowie historische Verbindungsdaten des Benutzers U zu Kontakten K, jeweils aufbereitet nach Häufigkeit zu Eingangsgröße a bis g (symbolisiert durch Historiendatei 408) und liefert als Ergebnis die nach Wahrscheinlichkeit sortierte Anzeigeliste 200 von Wertepaaren eines jeweiligen Kontakts Kx (x= 1 ... Anzahl der Kontakte des Benutzers U) mit Medien Mk (k = 1 ... Anzahl aktuell zur Verfügung stehender Medien). Der Berechnungsschritt 402 berechnet hierfür Wahrscheinlichkeiten für alle Kontakte Kx in der Kontaktliste K des Benutzers U für alle zur Verfügung stehenden Medien Mk anhand von Eingangsgrößen a bis g, wobei eine Gewichtung der Eingangsgrößen a bis g erfolgen kann. Die Eingangsgrößen a bis g entsprechen dabei den Informationen, die durch die Mobilkommunikationseinheit 108, die Uhr 110, die Kamera 112, die WLAN-Einheit 114, die GPS-Einheit 116, den Bewegungssensor 118 und die Bluetooth-Einheit 120 geliefert werden. Die Eingangsgrößen a bis g können auch als Kriterien im Sinne der Erfindung verstanden werden. Die Kontaktliste K (Kontaktdatei 406) und die historischen Verbindungsdaten (Historiendatei 408) werden dabei von dem Speicher 104 (Fig. 1) geliefert. Alternativ bzw. vorbereitend können die Kontaktliste K (Kontaktdatei 406) und/oder die historischen Verbindungsdaten (Historiendatei 408) auch von einem Server geliefert bzw. geladen werden. Die Historiendatei 408 kann auch als Anrufjournal im Sinne der Erfindung verstanden werden.

Ein Datensatz einer Verbindungsinformation der Historiendatei 408 enthält beispielsweise folgende Kommunikationsmetadaten:

- Zeit (bzw. Kategorisierung z.B. morgens, nachmittag, abends)
- Datum (bzw. Kategorisierung Wochentag)
- Rufnummer/Kontakt (gewählte Rufnummer/Kontakt)
- Ort (Koordinaten des Standortes, an dem die Verbindung aufgebaut wurde)
- Umgebungsinformationen (z.B. Bluetooth-IDs von gepaarten Geräten, WLAN-IDs, RFIDs, Bewegungssensor, Lichtsensor, ...)

Die zusätzliche Information zu Ort sowie Umgebungsinformation werden zusätzlich zu den traditionellen Daten abgelegt.

Die Berechnung der Wahrscheinlichkeit in Schritt 402 erfolgt nach folgendem Schema:

$$P ( \{ \text{Wählen Kontakt X} \} ) =$$

$$f ( X, \text{aktueller Zeit, aktueller Ort, aktuelle Umgebungsinformation,}$$

$$\text{historische Verbindungsdaten})$$

Die Berechnung der Wahrscheinlichkeiten P sowie die sich daraus ergebene Sortierung der Verbindungen/Kontakte des Anrufjournals erfolgt lokal am Mobiltelefon. In einer Abwandlung kann die Berechnung der Wahrscheinlichkeiten P auch zentral auf einem Server erfolgen, sofern ein zentrales Anrufjournal von mehreren Endgeräten verwendet wird.

Optional kann neben einer Sortierung auch eine Filterung bei der Darstellung des Anrufjournals erfolgen, d.h. Einträge, deren Wahrscheinlichkeit unterhalb einer Schwelle S liegen, werden nicht dargestellt.

Durch den Einsatz von Mobilgeräten (Handy/Tablet) ist ein Telefon heute nicht mehr ortsgebunden. Dieser Umstand macht es möglich, dem Nutzer zusätzliche Komfortfunktionen anzubieten. Die hier vorgestellte Lösung bietet dem Nutzer eine orts- und/oder zeitabhängige Filter- bzw. Sortierfunktion für das Anrufjournal. Wird diese neue Funktion aktiviert, werden die Einträge im Anrufjournal unter Berücksichtigung der historischen Einträge nach Ort bzw. auch Zeit, d. h., einer daraus berechneten Wahrscheinlichkeit, sortiert bzw. gefiltert. Eine Einflussgröße für die Berechnung der Wahrscheinlichkeit kann z. B. die aktuelle Entfernung zu früheren Ausgangspunkten der Kommunikation sein. Anrufdaten der Vergangenheit, deren Ausgangspunkt nahe dem aktuellen Standort liegt, werden in der Reihenfolge in der Liste priorisiert und weiter oben dargestellt. Eine weitere Einflussgröße kann die Berücksichtigung der Uhrzeit sein, so dass Rufnummern, die man z. B. hauptsächlich abends oder nur an bestimmten Wochentagen gewählt hat, am Morgen oder an anderen Wochentagen erst weiter unten in der Liste dargestellt werden. Auch eine gewichtete Kombination aus Entfernung und Anrufzeit sowie Häufigkeit der Verbindungen ist realisierbar. Bekannte Verfahren der Stochastik sind hier verwendbar, um Wahrscheinlichkeiten einzelner Einträge abzuleiten und die Liste der Anrufe entsprechend zu sortieren oder zu filtern.

Beispielsweise ist ein Mobiltelefon eines Nutzers A in einem Besprechungszimmer mit einer dort vorhandenen Dockingstation via Bluetooth verbunden (gepaart). Aus den historischen Verbindungsdaten kann abgeleitet werden, dass in diesem Zustand (Mobiltelefon verbunden mit Dockingstation mit einer eindeutigen Indentifizierungsnummer (UID) xyz) eine Anzahl von Rufnummern bzw. Kontakten mit höherer Wahrscheinlichkeit gewählt worden sind. Hierbei kann auch die aktuelle Uhrzeit bzw. der aktuelle Wochentag einfließen. Die Sortierung der Einträge erfolgt nach den ermittelten Wahrscheinlichkeiten. Gleiches gilt z.B. für das Büro oder den Heimarbeitsplatz oder auch im Auto etc.

Die Bestimmung des Orts kann auf unterschiedliche Weise erfolgen bzw. aufgrund von Umgebungsinformationen abgeleitet werden. Hierzu stehen den Geräten in der Regel eine oder mehrere Techniken zur Verfügung:

- GPS (nur außerhalb von Gebäuden nutzbar),
- WLAN (Genauigkeit erst durch "Kreuzpeilung" durch mehrere WLAN-APs / Controller ausreichend, aber u. U. reicht auch schon die Sichtbarkeit, d. h., der Name eines oder die Kombination von verschiedenen Accesspoints aus - so hat der WLAN-Router zu Hause in der Regel einen unterschiedlichen Namen als der/die Accesspoints am Arbeitsplatz),
- Bluetooth - Nähe oder Pairingzustand zu anderen stationären Bluetooth Geräten - z.B. Docking Station am Arbeitsplatz oder Freisprecheinrichtung im Auto,

- RFID (Nur sehr kurze Reichweite)

Zu den Verbindungsinformation (gewählte Rufnummer/Kontakt, Zeit, Datum) können zusätzlich noch weitere Daten zum Ort gespeichert (entweder lokal oder zentral, d. h. es erfolgt eine Übertragung z. B. in die Cloud) werden. Ortsdaten sind beispielsweise: GPS-Koordinaten, Name/SSID des stärksten sichtbaren WLAN-Routers, Bluetooths-ID von gepairten Geräten wie z. B. Docking Station am Arbeitsplatz oder im Besprechungszimmer.

Die ortsabhängige und zeitgefilterte Anzeige von Anrufjournaleinträgen bietet dem Nutzer zusätzlichen Komfort und reduziert den Zeitaufwand, der für die Bedienung des Gerätes benötigt wird.

Eine Voraussetzung für die Realisierung der ortsabhängigen Anzeige/Filterung von Anrufjournaleinträgen ist die Möglichkeit, den aktuellen Ort des Mobilgerätes zu bestimmen bzw. Umgebungsinformationen zu ermitteln (z.B. WLAN-IDs) - dies ist bei modernen Smartphones gegeben.

Bluetooth 4.0 (auch unter der Bezeichnung "Low Energy" oder "SMART" bekannt) unterstützt ein spezielles "Proximity"-Profil mit dessen Hilfe es möglich ist, die Entfernung von zwei Bluetooth 4.0 Geräten zu ermitteln. Bei Vorhandensein z. B. einer Bluetooth-Freisprechanlage in einem Besprechungsraum kann mit dieser Information ermittelt werden, ob sich das Mobilgerät in dem erwähnten Besprechungsraum befindet oder nicht. Diese Information kann dann wiederum von einer entsprechend programmierten Anwendung (App) auf dem Mobilgerät dazu verwendet werden, Wahrscheinlichkeiten zu berechnen und die Einträge des Anrufjournals entsprechend zu sortieren.

Die vorliegende Erfindung bietet einem Benutzer, der mit einem anderen Teilnehmer in einer bestimmten "Ort/Situation" kommunizieren möchte, eine intelligente (sinnvolle) Auswahl an Kommunikationspartnern bzw. Kommunikationsverbindungen an, ohne sich auf eine örtliche "Sortierung" von Call-Log Einträgen zu beschränken. Hierzu kann das System aufgrund von statistischen Berechnungen unter Berücksichtigung mehrerer Eingangsgrößen (u.a. der Verbindungshistorie) die höchstwahrscheinlichen Kommunikationspartner/-wege/-verbindungen für den aktuellen Ort bzw. die aktuelle Situation vorschlagen.

Die intelligente Auswahl von Kommunikationspartnern erfolgt nicht ausschließlich auf Basis von Ortsinformationen. Die Ortsinformation ist lediglich eine zusätzliche Information, um eine intelligente Vorauswahl (nach statistischer Auswertung) von Kommunikationspartnern treffen zu können. Stattdessen werden bzw. können zusätzlich Parameter/Informationsquellen herangezogen werden:

- Aktuelles Datum (d. h., Wochentag, Monat),
- Uhrzeit (gegebenenfalls klassifiziert in vormittags, mittags, nachmittags, abends, etc.),
- Bevorstehende Kalenderereignisse (z. B. eingetragene Besprechungen in Kalender),
- Häufigkeit der Kontaktaufnahme mit einem bestimmten Kommunikationspartner,
- Umgebung (z. B. Auto, Zuhause, Arbeit, ... abgeleitet aus Umgebungsinformation wie etwa "Verbunden via Bluetooth zur Freisprechanlage im Auto", "Nähe zu bestimmten WLAN-Netzwerken", etc.),
- Wetterinformationen wie Temperatur, Niederschlag (z.B. für Freizeitaktivitäten),
- ein Gesamtbild (im Folgenden als "Situation" bzw. "Situations-Informationen" bezeichnet), mit dessen Hilfe eine Wahrscheinlichkeit errechnet wird, mit der ein bestimmter Kommunikationspartner in einer bestimmten "Situation" voraussichtlich kontaktiert wird.

Beispielsweise ist in der Zeitspanne von 15 Minuten vor bis 15 Minuten nach Beginn einer Besprechung die Wahrscheinlichkeit höher, den Besprechungsorganisator anzurufen, als 30 Minuten nach dem Beginn der Besprechung. Es berechnet sich deshalb eine höhere Wahrscheinlichkeit zu dieser Zeit für gewisse Rufnummern/Kontakte bzw. die Telefonnummer des Besprechungsraums. Hat das System Zugriff auf den Kalender, können Informationen aus dem aktuellen bzw. bevorstehenden Kalenderereignis in der Berechnung berücksichtigt werden (auch ggfs. Raum-Nr. und Mapping der Raum-Nr. auf eine bestimmte Telefonnummer über einen Directory-Zugriff oder Adressbuch). Gleiche Erwägungen können für andere Kalenderereignisse angestellt werden.

Die vorliegende Erfindung ist auch nicht auf ein bestimmtes Medium wie z.B. VoIP-Telefonie beschränkt. Auch bei anderen Kommunikationsformen können hierdurch dem Benutzer auf intelligente Art und Weise Vorschläge zur Kontaktaufnahme mit bestimmten Kommunikationspartnern unterbreitet werden, deren Wahrscheinlichkeit aus historischen Information berechnet wurde. Beispielsweise schreibt ein Nutzer in einem Besprechungszimmer meist eine Email oder Textnachrichten an private Kontakte (z.B. seiner Familienmitgliedern), führt aber keine Sprachanrufe durch. Sinnvollerweise bietet das System nun aufgrund einer "Situations-Informationen" primär textuelle Kommunikationsmedien für diese Kontakte an.

Es kann auch sein, dass gewissen Kontakte zu bestimmten Zeiten zu bestimmten Orten (d.h. Situationen) stets via Video-Call (z.B. facetime) angerufen werden - somit würde die Wahrscheinlichkeit entsprechend höher berechnet und in der Anzeige zum Verbindungsaufbau entsprechend vorgeschlagen - stets abhängig von der aktuellen Situation.

Neben der intelligenten Auswahl von Kommunikationspartner für verschiedene Medien ist auch die intelligente Auswahl des Mediums selbst möglich. Beispielsweise stellt das System aufgrund der "Situations-Informationen" fest, dass ein Benutzer im Auto innerhalb einer bestimmten geografischen Region immer GSM Anrufe ausführt. Dies könnte dem Umstand geschuldet sein, dass in dieser Region keine zuverlässige Datenverbindung und somit keine VolP-Anrufe möglich sind. Durch diese Informationen kann dem Benutzer bei einem ausgehenden Ruf das jeweils passende Medium vorgeschlagen werden.

Die unter Bezug auf die dargestellten Ausführungsformen beschriebenen Merkmale der Erfindung, z.B. die WLAN-Verbindung 304 in Fig. 3A, können auch bei anderen Ausführungsformen der Erfindung, beispielsweise zusätzlich oder alternativ zu der RFID/Bluetooth-Verbindung 306 in Fig. 3B, vorhanden sein, außer wenn es anders angegeben ist oder sich aus technischen Gründen von selbst verbietet.

**Patentansprüche**

1. Verfahren zur Verwaltung eines Anrufjournals (408) eines mobilen Kommunikationsgeräts (100), das insbesondere als Telefon oder mobiles Endgerät ausgeführt ist,
   wobei das Anrufjournal (408) Journaleinträge zu aus- und/oder eingehenden Anrufen aufweist,
   wobei jeder Journaleintrag Kommunikationsmetadaten aufweist, welche wenigstens umfassen:

   - Verbindungskennung des Kommunikationspartners,
   - Datum und Uhrzeit des Anrufs,
   - Richtung des Anrufs,
   und
   - Standortinformationen des Kommunikationsgeräts zum Zeitpunkt des Anrufs,
   und wobei das Verfahren die Schritte umfasst:

   a) Erzeugen einer Anzeigeliste (200) mit Listeneinträgen (202), die von den Journaleinträgen des Anrufjournals (408) abgeleitet sind, und
   b) Bereitstellen der Anzeigeliste (200) für einen Verwender des Kommunikationsgeräts (100),

   wobei
   eine Reihenfolge der Listeneinträge (202) der Anzeigeliste (200) anhand einer Bewertung wenigstens eines Kriteriums bestimmt wird, das aus der Gruppe, welche
   - aktuelle Geräteparameter, beispielsweise zur Verfügung stehendes Kommunikationsmedium wie Instant Message, Telefon-Anruf, Video-Anruf, und E-Mail,
   - aktuelle Verbindungsparameter, beispielsweise Verbindungsqualität wie Bandbreite, Signalstärke, und Güte eines GSM-Signals,
   - bevorstehende oder laufende Kalenderereignisse,
   - eine bisherige Häufigkeit der Kontaktaufnahme mit dem Kommunikationspartner, der dem Journaleintrag zugeordnet ist,
   - ein bisheriges Annahme- oder Abweisungsverhalten bei Kontaktaufnahmen durch den Kommunikationspartner, der dem Journaleintrag zugeordnet ist,
   - Wetterdaten, beispielsweise Temperatur und/oder Niederschlag

   zum Zeitpunkt der Erzeugung der Anzeigeliste (200) umfasst, ausgewählt ist, wobei ein Bewegungssensor (118) des mobilen Kommunikationsgeräts (100) Informationen über einen Bewegungszustand des mobilen Kommunikationsgeräts (100) liefert, und wobei die Reihenfolge der Listeneinträge (202) der Anzeigeliste (200) weiterhin anhand einer Bewertung des Bewegungszustands des mobilen Kommunikationsgeräts (100) bestimmt wird.

2. Verfahren nach Anspruch 1,
   **dadurch gekennzeichnet, dass**
   ein weiteres Kriterium zur Festlegung der Reihenfolge der Listeneinträge (202) der Anzeigeliste (200) aus der Gruppe, die:

   - eine aktuelle Uhrzeit, insbesondere Tageszeit, die vorzugsweise aus der aktuellen Uhrzeit abgeleitet wird,
   - ein aktuelles Datum, insbesondere einen aktuellen Wochentag, der vorzugsweise aus dem aktuellen Datum abgeleitet wird, und
   - aktuelle Standortinformationen

zum Zeitpunkt der Erzeugung der Anzeigeliste (200) umfasst, ausgewählt ist.

3. Verfahren nach Anspruch 1 oder 2,
**dadurch gekennzeichnet, dass**
die Bewertung eine Wahrscheinlichkeitsbetrachtung (402) umfasst, die für jede Verbindungskennung anhand bisheriger Journaleinträge im Anrufjournal (408) ermittelt, mit welcher Wahrscheinlichkeit ein Anruf, auf welche das wenigstens eine Kriterium zutrifft, mit dieser Verbindungskennung von dem Kommunikationsgerät (100) ausgehen oder an dem Kommunikationsgerät (100) eingehen wird.

4. Verfahren nach einem der vorstehenden Ansprüche,
**dadurch gekennzeichnet, dass**
mehrere Journaleinträge des Anrufjournals (408) zu einem Listeneintrag (202) der Anzeigeliste (200) zusammengefasst werden.

5. Verfahren nach einem der vorstehenden Ansprüche,
**dadurch gekennzeichnet, dass**
die Anzeigeliste (200) beschränkt ist auf

- eine vorgegebene maximale Anzahl von Listeneinträgen (202), und/oder
- Listeneinträge (202) mit einer vorgegebenen Mindest-Wahrscheinlichkeit.

6. Verfahren nach einem der vorstehenden Ansprüche,
**dadurch gekennzeichnet, dass**
die Bestimmung der Reihenfolge der Listeneinträge (202) durch den Verwender des Kommunikationsgeräts (100) beeinflussbar ist, durch zumindest eine Maßnahme, die ausgewählt ist aus:

- Auswahl, Bevorzugung und/oder Ausschluss von Gruppen von Verbindungskennungen,
- Beschränkung auf ein- oder ausgehende Anrufe,
- Festlegung einer Mindest-Wahrscheinlichkeit
- Festlegung einer maximalen Anzahl von Listeneinträgen (202).

7. Verfahren nach einem der vorstehenden Ansprüche,
**dadurch gekennzeichnet, dass**
die Standortinformationen aus der Gruppe ausgewählt sind, die umfasst:

- Ortskoordinaten eines Satellitennavigationssystems,
- WLAN-Zugriff auf einen oder mehrere Einwahlknoten,
- Nähe oder Pairing-Zustand zu einem oder mehreren anderen Bluetooth-Geräten,
- RFID-Informationen,
- Umfeldkategorien,
- aktuelle Wetterdaten.

8. Vorrichtung zur Verwaltung eines Anrufjournals (408) eines vorzugsweise mobilen Kommunikationsgeräts (100), das insbesondere als Telefon oder mobiles Endgerät ausgeführt ist, wobei die Vorrichtung zur Durchführung des Verfahrens nach einem der vorstehenden Ansprüche ausgebildet und eingerichtet ist, wobei die Vorrichtung vorzugsweise das Kommunikationsgerät (100) selbst oder ein zentraler Anrufverwaltungsserver ist.

9. Computerprogramm zur Verwaltung eines Anrufjournals (408) eines vorzugsweise mobilen Kommunikationsgeräts (100), das insbesondere als Telefon oder mobiles Endgerät ausgeführt ist, umfassend Programmbefehle, die einen Computer dazu veranlassen, die Verfahrensschritte des Verfahrens nach einem der Ansprüche 1 bis 7 auszuführen, wenn das Computerprogramm auf den Computer geladen oder von diesem ausgeführt wird.

10. Softwareprodukt zur Verwaltung eines Anrufjournals (408) eines vorzugsweise mobilen Kommunikationsgeräts (100), das insbesondere als Telefon oder mobiles Endgerät ausgeführt ist, wobei das Softwareprodukt auf einem durch einen Computer lesbaren Medium gespeichert ist und das vorzugsweise direkt in den internen Speicher eines Computer geladen werden kann und das Programmcodes zur Durchführung der Verfahrensschritte des Verfahrens nach einem der Ansprüche 1 bis 7, wenn das Computerprogramm auf dem Computer ausgeführt wird, aufweist.

**Claims**

1. Method for managing a call journal (408) of a mobile communication device (100) that is in particular designed as a telephone or mobile end device,
   wherein the call journal (408) exhibits journal entries relating to incoming and/or outgoing calls:

   wherein each journal entry exhibits communication metadata, which include at least:

   - Connection code of the communication partner,
   - Date and time of the call,
   - Direction of the call,
   and
   - Location information of the communication device at the time of the call,

   and wherein the method includes the steps:

   a) Creation of a display list (200) with list entries (202) which are derived from the journal entries of the call journal (408), and
   b) Provision of the display list (200) for a user of the communication device (100),

   wherein
   the sequence of the list entries (202) of the display list (200) is determined on the basis of an assessment of at least one criterion that is selected from amongst the group that includes

   - current device parameters, for example, communications media which are available, such as instant messaging, telephone calls, video calls, and email,
   - current connection parameters, for example, connection quality such as band width, signal strength, and quality of a GSM-signal,
   - upcoming or ongoing calendar events,
   - a previous incidence of the establishment of contact with the communication partner that is assigned to the journal entry,
   - a previous acceptance or rejection behavior in the establishment of contact by the communication partner that is assigned to the journal entry,
   - weather data, for example, temperature and/or precipitation
   at the time of the creation of the display list (200), wherein a motion sensor (118) of the mobile communication device (100) delivers information relating to a state of movement of the mobile communication device (100), and wherein the sequence of the list entries (202) of the display list (200) is furthermore determined on the basis of the assessment of the state of movement of the mobile communication device (100).

2. Method according to Claim 1,
   **characterized in that**
   a further criterion for the determination of the sequence of the list entries (202) of the display list (200) is selected from amongst the group including:

   - the current time, in particular the time of day, which is preferably derived from the current time,
   - a current date, in particular a current day of the week, which is preferably derived from the current date, and
   - current location information
   at the time of the creation of the display list (200).

3. Method according to Claim 1 or 2,
   **characterized in that**
   the assessment includes a probability consideration (402), which determines for every connection code, on the basis of previous journal entries in the call journal (408), the probability with which a call, which complies with at least one criterion, is outgoing from the communication device (100) or would be incoming to the communication device (100) with this connection code.

4. Method according to one of the preceding claims,
   **characterized in that**

multiple journal entries of the call journal (408) are summarized in a list entry (202) of the display list (200).

5. Method according to one of the preceding claims,
**characterized in that**
the list (200) entry is limited to

- a prescribed maximum number of list entries (202), and/or
- list entries (202) with a prescribed minimum probability.

6. Method according to one of the previous claims,
**characterized in that**
the determination of the sequence of the list entries (202) can be influenced by the user of the communication device (100) by means of at least one measure that is included amongst:

- Selection, preference and/or exclusion from groups of connection codes,
- Limitation to incoming or outgoing calls,
- Specification of a minimum probability
- Specification of a maximum number of list entries (202).

7. Method according to one of the preceding claims,
**characterized in that**
the location information is selected from amongst the group that includes:

- Location coordinates of a satellite navigation system,
- WLAN access to one or multiple dial-in nodes,
- Proximity or pairing status to one or multiple other Bluetooth devices,
- RFID information
- Environment class
- Current weather data.

8. Device for managing a call journal (408) of preferably a mobile communication device (100) that is in particular designed as a telephone or mobile end device, wherein the device is designed and configured according to one of the preceding claims for the carrying out of the method, wherein the device is preferably the communication device (100) itself or a central call management server.

9. Computer program for managing a call journal (408) of preferably a mobile communication device (100), that is designed in particular as a telephone or mobile terminal, including program commands which enable a computer to execute the method steps of the method according to one of the Claims 1 through 7, when the computer program is loaded on the computer or is carried out by the same.

10. Software product for managing a call journal (408) of preferably a mobile communication device (100) that is designed in particular as a telephone or mobile end device, wherein the software product is stored on a medium that is readable by a computer and that can preferably be directly loaded into the internal memory of a computer and exhibits the program code for execution of the method steps of the method according to the Claims 1 through 7, when the computer program is executed on the computer.

**Revendications**

1. Procédé de gestion d'un journal d'appels (408) d'un appareil de communication mobile (100), qui est conçu en particulier en tant que téléphone ou appareil terminal mobile,
dans lequel le journal d'appels (408) comprend des entrées de journal pour des appels sortants et/ou entrants,
dans lequel chaque entrée de journal comprend des métadonnées de communication qui comportent au moins :

- un identifiant de liaison du partenaire de communication,
- des date et heure de l'appel,
- une direction de l'appel,
et

- des informations d'emplacement de l'appareil de communication pour l'instant de l'appel,

et dans lequel le procédé comporte les étapes :

a) de génération d'une liste d'affichage (200) avec des entrées de liste (202) qui sont déduites des entrées de journal du journal d'appels (408), et

b) de fourniture de la liste d'affichage (200) à un utilisateur de l'appareil de communication (100),

dans lequel

une séquence des entrées de liste (202) de la liste d'affichage (200) est déterminée à l'aide d'une évaluation d'au moins un critère qui est sélectionné dans le groupe qui comporte, à l'instant de la génération de la liste d'affichage (200)

- des paramètres d'appareil actuels, par exemple un support de communication disponible tel qu'un message instantané, un appel téléphonique, un appel vidéo et un courrier électronique,

- des paramètres de liaison actuels, par exemple une qualité de liaison telle qu'une largeur de bande, une intensité de signal et une qualité d'un signal GSM,

- des événements de calendrier à venir ou en cours,

- une fréquence actuelle de la prise de contact avec le partenaire de communication qui est associé à l'entrée de journal,

- un comportement actuel d'acceptation ou de rejet lors de prises de contact par le partenaire de communication qui est associé à l'entrée de journal,

- des données météorologiques, par exemple la température et/ou la pluviosité,

dans lequel un capteur de mouvement (118) de l'appareil de communication mobile (100) délivre des informations sur un état de mouvement de l'appareil de communication mobile (100) et dans lequel la séquence des entrées de liste (202) de la liste d'affichage (200) est déterminée en outre à l'aide d'une évaluation de l'état de mouvement de l'appareil de communication mobile (100).

2. Procédé selon la revendication 1,
**caractérisé en ce que**
un autre critère pour la spécification de la séquence des entrées de liste (202) de la liste d'affichage (200) est sélectionné dans le groupe qui comporte, à l'instant de la génération de la liste d'affichage (200) :

- une heure actuelle, en particulier l'heure de jour qui est déduite de préférence de l'heure actuelle,
- une date actuelle, en particulier un jour de la semaine actuel qui est déduit de préférence de la date actuelle, et
- des informations d'emplacement actuelles.

3. Procédé selon la revendication 1 ou 2,
**caractérisé en ce que**
l'évaluation comporte une prise en considération d'une probabilité (402) qui détermine, pour chaque identifiant de liaison à l'aide d'entrées de journal actuelles dans le journal d'appels (408), avec quelle probabilité un appel que l'au moins un critère satisfait sortira de l'appareil de communication (100) ou entrera dans l'appareil de communication (100) avec cet identifiant de liaison.

4. Procédé selon l'une quelconque des revendications précédentes,
**caractérisé en ce que**
plusieurs entrées de journal du journal d'appels (408) sont rassemblées dans une entrée de liste (202) de la liste d'affichage (200).

5. Procédé selon l'une quelconque des revendications précédentes,
**caractérisé en ce que**
la liste d'affichage (200) est limitée

- à un nombre maximal prédéfini d'entrées de liste (202), et/ou
- à des entrées de liste (202) avec une probabilité minimale prédéfinie.

6. Procédé selon l'une quelconque des revendications précédentes,
**caractérisé en ce que**
la détermination de la séquence des entrées de liste (202) par l'utilisateur de l'appareil de communication (100) peut être influencée par au moins une mesure qui est sélectionnée parmi :

- une sélection, une préférence et/ou une exclusion de groupes d'identifiants de liaison,
- une limitation à des appels entrants ou sortants,
- une spécification d'une probabilité minimale
- une spécification d'un nombre maximal d'entrées de liste (202).

7. Procédé selon l'une quelconque des revendications précédentes,
**caractérisé en ce que**
les informations d'emplacement sont sélectionnées à partir du groupe qui comporte :

- des coordonnées locales d'un système de navigation par satellites,
- un accès à un WLAN sur un ou plusieurs noeuds de connexion,
- une proximité ou un état de couplage à un ou plusieurs autres appareils Bluetooth,
- des informations RFID,
- des catégories d'environnement,
- des données météorologiques actuelles.

8. Dispositif de gestion d'un journal d'appels (408) d'un appareil de communication de préférence mobile (100) qui est conçu en particulier en tant que téléphone ou appareil terminal mobile, dans lequel le dispositif est formé et agencé pour l'exécution du procédé selon l'une quelconque des revendications précédentes, dans lequel le dispositif est de préférence l'appareil de communication (100) lui-même ou un serveur de gestion d'appels.

9. Programme d'ordinateur pour la gestion d'un journal d'appels (408) d'un appareil de communication de préférence mobile (100), qui est conçu en particulier en tant que téléphone ou appareil terminal mobile, comportant des instructions de programme qui amènent un ordinateur à exécuter les étapes de procédé du procédé selon l'une quelconque des revendications 1 à 7 lorsque le programme d'ordinateur est chargé sur l'ordinateur ou exécuté par celui-ci.

10. Produit logiciel pour la gestion d'un journal d'appels (408) d'un appareil de communication de préférence mobile (100) qui est conçu en particulier en tant que téléphone ou appareil terminal mobile, dans lequel le produit logiciel est stocké sur un support lisible par un ordinateur et qui peut être chargé de préférence directement dans la mémoire interne d'un ordinateur et qui comprend des codes de programme pour l'exécution des étapes de procédé du procédé selon l'une quelconque des revendications 1 à 7 lorsque le programme d'ordinateur est exécuté sur l'ordinateur.

**Fig. 1**

EP 3 167 600 B1

200

**Kontakt Kx**       **Aktion Mk**

| | | |
|---|---|---|
| 202 (1) | Name Kontakt C | anrufen… |
| 202 (2) | Name Kontakt A | IM verfassen… |
| 202 (3) | Name Kontakt E | anrufen… |
| 202 (4) | Name Kontakt G | Video-Verbindung… |
| 202 (5) | Name Kontakt A | Skype-Verbindung… |
| 202 (6) | Name Kontakt F | email verfassen… |
| 202 (i) | ….. | |

Höchste Wahrscheinlichkeit

**Fig. 2**

200a

-> A
-> B
-> C
-> D

100

WLAN

WLAN
ID
‚HOME‘

304

302

106

**Fig. 3A**

200b

-> C
-> B
-> D

10:20

106a

100

312

LAN
ID
‚OFFICE‘

RFID/
Bluetooth

310

306

Docking Station

308

106

**Fig. 3B**

200c

-> D

-> C

100

312

LAN
ID
‚OFFICE‘

RFID/
Bluetooth

310

19:30

306

Docking Station

106

308

106a

**Fig. 3C**

200d

-> A

-> D

100

316

106

314

Bluetooth

106

**Fig. 3D**

**400**

**404**

Eingangsgrößen a - g

$$P(K_x \cup M_k)$$

∀ Kontakte Kx ; x = 1 ... Anzahl Kontakte des Users U

∀ Medien $M_k$ ; k = 1 ... Anzahl aktuell zur Verfügung stehender Medien M

Berechnung von Wahrscheinlichkeiten für alle Kontakte in Kontaktliste K des Benutzers U für alle zur Verfügung stehenden Medien M dabei Gewichtung der Eingangsgrößen

Kontaktliste K des Benutzers U

**406**

Historische Verbindungsdaten des Benutzers U zu Kontakten K; jeweils aufbereitet nach Häufigkeit zu Eingangsgröße a - g

**408**

Nach Wahrscheinlichkeit sortierte Liste von Wertepaaren (Kontakten Kx mit Medium Mk)

**402**

**200**

**Fig. 4**

EP 3 167 600 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011098491 A
- EP 1528770 A
- US 8705707 B1
- EP 2503764 A1
- WO 2012100227 A2
- US 2014185609 A1
- US 2013346408 A1